# DEMANDE DE BREVET EUROPEEN

(11) **EP 4 672 718 A1**
(43) Date de publication de la demande: **31.12.2025**
(21) Numéro de dépôt: 25184975.8
(22) Date de dépôt: 24.06.2025
(51) Int. Cl.: H04L 67/12, H04L 67/56, H04L 67/561

(54) **DISPOSITIF ET PROCÉDÉ DE COMMUNICATION COLLABORATIVE AU SEIN D'UN VÉHICULE AUTOMOBILE**

(30) Priorité: 24.06.2024 FR 2406752
(71) Demandeur: Ampere SAS, 92100 Boulogne-Billancourt (FR)
(72) Inventeur: HOUGARD, Simon, 78084 GUYANCOURT (FR); SCIBILIA, Giorgio, 78084 GUYANCOURT (FR)
(74) Mandataire: Renault Group

(57) **Abrégé**

L'invention concerne un véhicule automobile (1) comportant plusieurs sièges (12, 12A, 12B) adaptés à accueillir plusieurs passagers (2, 2A, 2B), et un système informatique embarqué (10) qui est adapté à communiquer avec des périphériques mobiles (20A, 20B) appartenant aux passagers.

Selon l'invention, le système informatique embarqué est programmé pour communiquer à un premier des périphériques mobiles des données d'échange issues d'informations émises par un second des périphériques mobiles.

## Description

### DOMAINE TECHNIQUE DE L'INVENTION

La présente invention concerne de manière générale l'échange de données numériques au sein d'un véhicule automobile.

Elle concerne plus particulièrement un procédé d'échange de données et un véhicule automobile adapté à mettre en œuvre un tel procédé.

L'invention trouve une application particulièrement avantageuse dans le cadre des jeux multi-joueurs.

### ETAT DE LA TECHNIQUE

Dans le domaine du transport automobile, les passagers sont de plus en plus nombreux à souhaiter utiliser leurs propres périphériques mobiles (notamment smartphones) pour se divertir et communiquer.

Lorsqu'ils souhaitent interagir, que ce soit simplement pour échanger des données ou pour se divertir ensemble, la solution actuelle consiste à se connecter à un même serveur extérieur au véhicule, via un réseau de téléphonie mobile de type 4G ou 5G.

Cette solution ne fonctionne donc que pour autant que la connexion à ce réseau de téléphonie mobile soit stable, ce qui peut limiter son utilisation dans certaines zones géographiques et sur certains véhicules (avions notamment).

### PRESENTATION DE L'INVENTION

La présente invention vise à proposer un système d'échange de données innovant, utilisable dans un véhicule automobile et qui n'est pas dépendant de la qualité d'un réseau de téléphonie mobile.

Plus particulièrement, on propose selon l'invention un véhicule automobile comportant plusieurs sièges adaptés à accueillir plusieurs passagers, et un système informatique embarqué qui est adapté à communiquer avec des périphériques mobiles appartenant aux passagers et qui est programmé pour communiquer à un premier des périphériques mobiles des données d'échange issues d'informations émises par un second des périphériques mobiles.

On propose également un procédé de communication entre un système informatique embarqué d'un véhicule automobile et des périphériques mobiles appartenant à des passagers situés dans le véhicule automobile, dans lequel il est prévu que le système informatique embarqué communique à un premier des périphériques mobiles des données d'échange issues d'informations émises par un second des périphériques mobiles.

L'invention propose donc de résoudre le problème de connexion stable en créant un réseau local entre les périphériques mobiles. Ce réseau local est particulier en ce sens qu'il est géré par le système informatique du véhicule automobile. Le protocole de communication utilisé prévoit donc que le processus se déroule en partie sur le système informatique du véhicule automobile et en partie sur les périphériques mobiles.

Ainsi, les passagers peuvent utiliser leurs propres périphériques (smartphone, tablette...) pour communiquer entre eux ou avec le système informatique du véhicule automobile.

La communication entre les périphériques des passagers se fait donc via le système informatique embarqué du véhicule, ce qui offre de nombreux avantages.

Le premier avantage est que la qualité de cette communication est indépendante de la qualité du réseau de téléphonie mobile.

Le second avantage est que cette communication peut se faire dans le cadre d'un protocole propriétaire, qui permet par exemple de se passer des étapes fastidieuses de configuration et d'authentification individuelles des périphériques. En effet, cette communication se fait dans un cadre restreint, à savoir au sein de l'habitacle du véhicule, ce qui limite les potentiels problèmes.

Le protocole étant limité à un usage restreint, il peut être développé de façon à être facilement ouvert à tout type de périphérique (de toute marque), sans nécessiter l'achat de matériel spécifique, ce qui limiterait sinon son adoption par les passagers.

Il peut en outre être développé de façon à être utilisable dès lors que plusieurs passagers sont détectés au sein du véhicule (que le moteur du véhicule soit éteint ou allumé).

Il peut enfin être développé de façon à permettre aux passagers de communiquer avec le système informatique embarqué pour interagir avec les différentes fonctionnalités offertes par le véhicule (climatisation, musique...).

Préférentiellement, avant de communiquer lesdites données d'échange, le système informatique embarqué est programmé pour exécuter un protocole de connexion des périphériques mobiles.

D'autres caractéristiques avantageuses et non limitatives du procédé conforme à l'invention, prises individuellement ou selon toutes les combinaisons techniquement possibles, sont les suivantes :
- avant de communiquer lesdites données d'échange, le système informatique embarqué exécute un protocole de connexion des périphériques mobiles ;
- le protocole de connexion comprend une étape de diffusion de paquets de données de connexion intervalles réguliers, et une étape de réception d'une requête de connexion émise en retour par chaque périphérique mobile ;
- les informations émises par le second périphérique sont filtrées par le système informatique embarqué, en fonction de leur format ;
- les données contiennent des instructions d'un jeu.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] est une vue schématique de dessus d'un habitacle d'un véhicule automobile conforme à l'invention ;
[Fig. 2] est un graphique chronologique illustrant différentes étapes de connexion de deux périphériques mobiles à un système informatique embraqué du véhicule automobile de la figure 1 ;
[Fig. 3] est un graphique chronologique illustrant différentes étapes d'échange de données entre les deux périphériques via le système informatique embraqué du véhicule automobile de la figure 1.

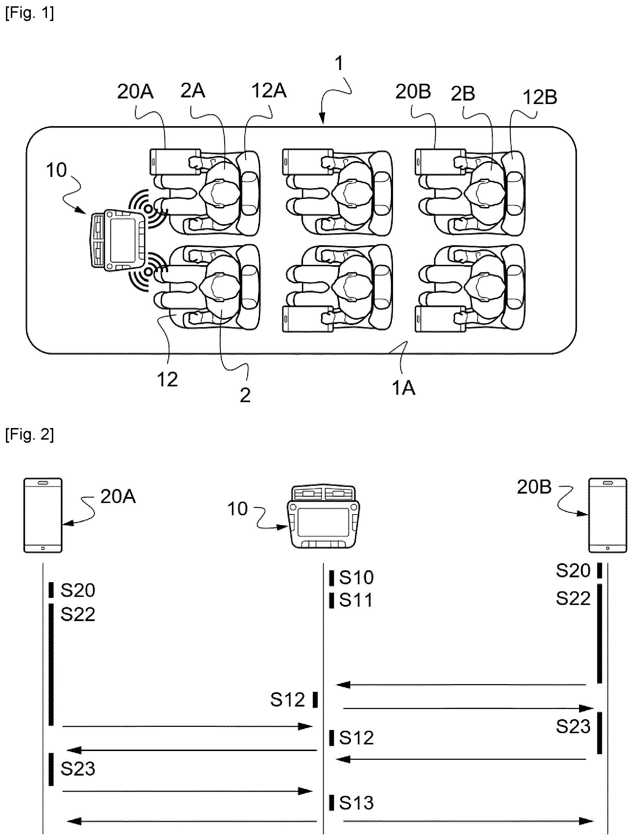

Sur la figure 1, on a représenté un véhicule automobile 1.

Ce véhicule automobile pourrait être de tout type (voiture, train, car, camion, bateau, avion...). On considérera ici qu'il s'agit d'une véhicule terrestre routier. Il s'agira de préférence d'un véhicule comportant entre 3 et 9 places. Il s'agira en pratique d'une voiture.

Ce véhicule automobile 1 comporte un châssis et des éléments de carrosserie qui délimitent ensemble un habitacle 1A.

Sur la figure 1, on a plus précisément représenté l'intérieur de cet habitacle 1A, avec ici six sièges 12, 12A, 12B accueillant six passagers 2, 2A, 2B. L'un de ces sièges accueille un passager 2 particulier, à savoir le conducteur.

Dans la suite de la description, le terme « passager » s'appliquera de préférence exclusivement aux autres occupants du véhicule, et pas au conducteur, pour des raisons de sécurité.

Ici, chacun des passagers 2A, 2B est muni de son propre périphérique mobile 20A, 20B.

Un périphérique mobile 20A, 20B désigne un appareil informatique portable (i.e. que le passager peut emporter en dehors du véhicule automobile 1) qui comporte une interface Homme-Machine, à savoir de préférence un écran d'affichage.

Ce périphérique mobile 20A, 20B pourrait se présenter sous des formes diverses. Il pourra typiquement d'agir d'un téléphone portable ou d'une tablette informatique. En variante, il pourrait également s'agir d'une montre connectée, de lunettes connectées, ou encore d'un masque de réalité virtuelle ou de réalité augmentée.

On notera à ce sujet qu'un même passager pourra être équipé de plusieurs périphériques mobiles.

De son côté, le véhicule automobile 1 comporte généralement plusieurs systèmes informatiques embarqués, par exemple pour la gestion du groupe motopropulseur, pour les systèmes de confort (climatisation, sièges électriques, vitres électriques, éclairage, pression des pneus), pour la sécurité (antiblocage des roues, contrôle de stabilité, airbags, régulateur de vitesse...), et pour l'info-divertissement (autoradio, navigation, téléphonie, assistant vocal, connectivité internet, affichage de données...).

Bien entendu, en variante, tous ces systèmes informatiques embarqués pourraient être combinés en un seul système.

Dans la suite, on considérera plus précisément l'un de ces systèmes informatiques embarqués, à savoir le système d'info-divertissement (simplement appelé « système informatique embarqué 10 » dans la suite de cette description).

Ce système informatique embarqué 10 comporte au moins un processeur, au moins une mémoire, des interfaces d'entrée et de sortie, et un écran d'affichage.

Grâce à sa mémoire, le système mémorise une application informatique, constituée de programmes d'ordinateur comprenant des instructions dont l'exécution par le processeur permet la mise en œuvre de différents processus, notamment le procédé décrit ci-après.

Grâce à ses interfaces, le système informatique embarqué 10 est adapté à communiquer avec les périphériques avec les autres systèmes informatiques du véhicule.

Pour sa communication avec les autres systèmes informatiques du véhicule, il utilise de préférence un réseau filaire, par exemple un réseau de type CAN-BUS.

Pour sa communication avec les périphériques mobiles 20A, 20B, il utilise un réseau de communication sans fil.

Il s'agira de préférence d'un réseau à courte portée (inférieure au kilomètre). Il s'agira en outre de préférence d'un réseau à faible puissance (de préférence au moins deux fois inférieure à celle du Bluetooth).

Il pourra typiquement s'agir d'une technologie « Bluetooth Low Energy », parfois appelé « Bluetooth Smart ». On peut ici rappeler que cette technologie utilise des intervalles très courts pour transférer de petits paquets de données et passe en mode veille entre les transferts, ce qui réduit considérablement la consommation d'énergie par rapport à la technologie Bluetooth classique.

Bien entendu, d'autres technologies pourraient en variante être employées, pour autant qu'elles permettent un échange de données bidirectionnel (typiquement le protocole de communication WIFI régi par les normes du groupe IEEE 802.11 - ISO/CEI 8802-11).

L'invention consiste alors à utiliser ce réseau de communication sans fil au sein de l'habitacle 1A du véhicule automobile, pour faire communiquer entre eux les périphériques mobiles 20A, 20B des passagers 2A, 2B.

Elle permet ainsi à une partie au moins des passagers 2A, 2B d'interagir entre eux à l'aide de leurs périphériques mobiles 20A, 20B, même en l'absence de réseau de téléphonie mobile à longue portée (de type 4G, 5G ou équivalents). Elle leur permet en outre d'interagir avec le système informatique embarqué 10.

L'idée est ainsi d'implémenter une application (ci-après appelée « service collaboratif ») qui se déroule simultanément sur le système informatique embarqué 10 et sur les périphériques mobiles 20A, 20B des passagers 20A, 20B. Cette application est donc prévue pour être distribuée en plusieurs endroits (sur le système informatique embarqué 10 et sur les périphériques mobiles 20A, 20B).

Dans ce cadre, le système informatique embarqué 10 a la charge de gérer le protocole de connexion des périphériques mobiles 20A, 20B des passagers 2A, 2B, de gérer les échanges de données entre les périphériques mobiles 20A, 20B ainsi que entre chaque périphérique et le système informatique embarqué 10, de filtrer les données issues des périphériques mobiles 20A, 20B (par exemple de façon à écarter ceux dont le format n'est pas considéré comme valide), et plus généralement de coordonner le déroulement du service collaboratif.

De leurs côtés, les périphériques mobiles 20A, 20B ont en charge l'identification de la disponibilité d'un services collaboratif offert par le système informatique embarqué 10, d'exécuter le protocole de connexion (de préférence sans action de la part des passagers), de fournir les informations requises au système informatique embarqué 10, et plus généralement de mettre à disposition des passagers ce service collaboratif.

En pratique, le procédé peut se dérouler de la façon suivante.

En tout premier lieu, le système informatique embarqué 10 est démarré (étape préalable S10 sur la figure 2). C'est par exemple le cas dès le déverrouillage des portières du véhicule automobile. Le démarrage de ce système est donc indépendant du démarrage du groupe motopropulseur du véhicule.

Une opération préliminaire consiste ensuite à exécuter un protocole de connexion des périphériques mobiles 20A, 20B. Ce protocole est illustré sur la figure 2. Il est mis en œuvre en plusieurs étapes.

La première étape S11 consiste, pour le système informatique embarqué 10, à diffuser des paquets de données de connexion par « broadcast ».

Cette étape est de préférence mise en œuvre en boucle, à intervalle de temps réguliers.

Elle peut être exécutée sous condition, par exemple pour autant qu'au moins un passager est détecté au sein de l'habitacle 1A du véhicule automobile 1. Mais de préférence, elle est mise en œuvre dès que le système informatique embarqué 10 est démarré, quel que soit l'état du moteur (arrêté ou démarré), sans nécessiter de la part du conducteur ou d'un quelconque des passagers une action particulière.

La seconde étape S20 consiste, pour les passagers, à démarrer une application stockée dans leurs périphériques mobiles 20A, 20B (et ayant pour cela été installée sur les périphériques mobiles, par exemple en ayant été téléchargée auparavant auprès d'un magasin d'applications en ligne de type Play-Store ou Apple-Store).

Une fois l'application lancée, cette dernière recherche le service collaboratif (étape S22). Cette recherche consiste à attendre de recevoir l'un au moins des paquets de donnée de connexion puis, dès que c'est fait (i.e. lorsqu'un paquet reçu comporte les données attendues), à émettre une requête de connexion à destination du système informatique embarqué 10.

Dès réception de cette requête de connexion par le système informatique embarqué 10, ce dernier évalue la requête. En pratique, il contrôle que la requête comporte les informations de connexion demandées (étape S12).

Si c'est le cas, il renvoie au périphérique mobile 20A, 20B ayant transmis la requête de connexion un signal d'acceptation.

A réception de ce signal d'acceptation, le périphérique mobile 20A, 20B renvoie des informations préliminaires au système informatique embarqué 10 (étape S23).

Si le service collaboratif est un jeu, ces informations préliminaires comprennent des informations relatives notamment au joueur (typiquement son identifiant).

Alors, lorsque plusieurs passagers sont ainsi enrôlés, le système informatique embarqué 10 peut envoyer à leurs périphériques mobiles 20A, 20B un signal de démarrage du service collaboratif.

Si le service collaboratif est un jeu, ce signal de démarrage peut comprendre par exemple des données relatives au jeu (typiquement son nom, les règles du jeu...).

A ce stade, on peut noter que le protocole de connexion des périphériques mobiles 20A, 20B n'a pas nécessité d'action particulière de la part des passagers. Ces derniers se sont en effet contentés de démarrer l'application mobile se trouvant sur leurs périphériques mobiles 20A, 20B.

Ainsi, l'application distribuée sur les périphériques mobiles 20A, 20B et le système informatique embarqué 10 offre dès lors un espace collaboratif dans lequel des données peuvent être échangées, soit entre les passagers 12A, 12B, soit entre chaque passager et le système informatique embarqué 10.

Dans cet espace collaboratif, le système informatique embarqué 10 peut notamment recevoir des informations d'un des périphériques mobiles, les traiter si nécessaire de façon à obtenir des données d'échange, puis communiquer ces données d'échange à l'autre des périphériques mobiles.

L'idée est que l'ensemble des signaux échangés passe par le système informatique embarqué 10. Ce dernier permet donc d'assurer une bonne fiabilité dans la communication, et éventuellement de sécuriser les échanges entre les périphériques mobiles 20A, 20B.

En pratique, le système informatique embarqué 10 pourrait se contenter de transmettre les informations reçues du premier périphérique mobile 20A vers le second périphérique mobile 20B.

Mais de façon préférentielle, il contrôle les informations reçues avant toute chose.

Ce traitement consiste ici au moins à filtrer ces informations. Ainsi sont rejetées les informations qui ne sont pas codées dans un ou plusieurs formats prédéterminés. Autrement formulé, ces informations ne sont pas traitées si elles ne sont pas dans un format adéquat.

Elles peuvent ensuite être acheminées ou non vers le second périphérique mobile 20B, en fonction des données qu'elles contiennent.

Elles peuvent l'être directement ou après un temps d'attente s'il s'avère de synchroniser les périphériques entre eux.

Typiquement, les informations reçues peuvent être destinées à l'un des autres périphériques mobiles présents dans l'habitacle, auquel cas elles sont redirigées vers cet autre périphérique mobile, ou au système informatique embarqué 10, auquel cas elles ne sont pas communiquées aux autres périphériques mobiles.

On peut ainsi prévoir que ces informations contiennent un identifiant du destinataire.

Typiquement, ces informations peuvent comporter des requêtes à destination du système informatique embarqué 10, permettant par exemple de commander l'une des fonctionnalités offertes par le véhicule automobile 1 (la climatisation, la radio, la navigation...).

Elles peuvent en variante comporter des données que le passager qui possède le premier périphérique mobile 20A souhaite communiquer au second périphérique mobile 20B.

Encore en variante, elles peuvent comporter des données utiles dans le cadre du service collaboratif.

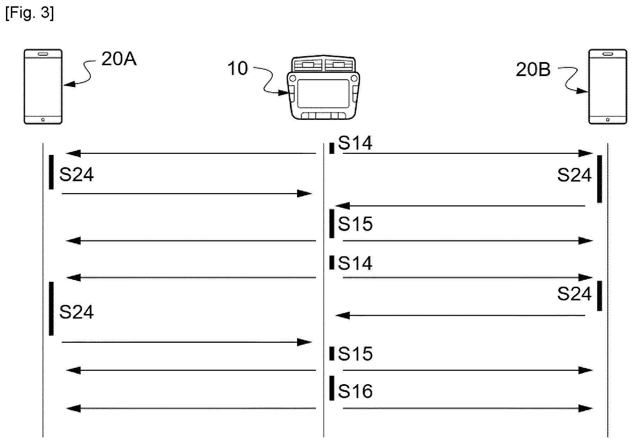

A titre d'exemple, si le service collaboratif est un jeu, on peut détailler les échanges d'informations et données sur la base de la figure 3.

Au cours d'une première étape S14, le système informatique embarqué 10 acquiert une question (par exemple parmi une liste de questions pré enregistrées dans sa mémoire).

Il la transmet ensuite à tous les périphériques mobiles 20A, 20B enrôlés.

Les passagers qui utilisent ces périphériques peuvent les utiliser pour répondre à la question au cours d'une étape S24. Une fois la réponse donnée, le périphérique émet un signal à destination du système informatique embarqué 10.

Lorsqu'il a reçu toutes les réponses, le système informatique embarqué 10 peut transmettre la bonne réponse aux périphériques mobiles 20A, 20B enrôlés, ainsi que les points attribués aux passagers correspondants (étape S15), en fonction des réponses qu'ils ont données.

Ces étapes S14, S24 et S15 peuvent être répétées jusqu'à la fin du jeu.

Alors, au cours d'une dernière étape S16, le système informatique embarqué 10 transmet les résultats aux périphériques mobiles 20A, 20B et indique que le jeu a pris fin.

La présente invention n'est nullement limitée au mode de réalisation décrit et représenté, mais l'homme du métier saura y apporter toute variante conforme à l'invention.

Comme cela a été expliqué, le procédé est préférentiellement utilisé par les passagers du véhicule autres que le conducteur, ce dernier n'étant pas censé utiliser son périphérique mobile. Toutefois, on pourra prévoir qu'il s'applique également au conducteur, notamment dans certaines régions du monde où aucune réglementation ne l'empêche et/ou pour certaines professions (conducteur de taxi...) et/ou dans certaines configurations (par exemple véhicule à l'arrêt).

## Revendications

1. Procédé de communication entre un système informatique embarqué (10) d'un véhicule automobile (1) et des périphériques mobiles (20A, 20B) appartenant à des passagers (2, 2A, 2B) situés dans le véhicule automobile (1), dans lequel il est prévu que le système informatique embarqué (10) communique à un premier des périphériques mobiles (20A, 20B) des données d'échange issues d'informations émises par un second des périphériques mobiles (20A, 20B), **caractérisé en ce que** le système informatique embarqué (10) acquiert une question d'un jeu, la transmet ensuite aux périphériques mobiles (20A, 20B), puis chaque périphérique mobile (20A, 20B) émet un signal de réponse à la question, à destination du système informatique embarqué (10).

2. Procédé de communication selon la revendication 1, dans lequel, avant de communiquer lesdites données d'échange, le système informatique embarqué (10) exécute un protocole de connexion des périphériques mobiles (20A, 20B).

3. Procédé de communication selon la revendication 2, dans lequel le protocole de connexion comprend une étape de diffusion de paquets de données de connexion à intervalles réguliers, et une étape de réception d'une requête de connexion émise en retour par chaque périphérique mobile (20A, 20B).

4. Procédé de communication selon l'une des revendications 1 à 3, dans lequel les informations émises par le second périphérique (20A, 20B) sont filtrées par le système informatique embarqué (10), en fonction de leur format.
